# EUROPÄISCHE PATENTANMELDUNG

(11) **EP 0 867 791 A1**
(43) Veröffentlichungstag der Anmeldung: **30.09.1998**
(21) Anmeldenummer: 98105622.9
(22) Anmeldetag: 27.03.1998
(51) Int. Cl.: G05B 19/042

(54) **Bedien- bzw. Anzeigevorrichtung mit einer elektronischen Steuereinheit, insbesondere mit einem Mikroprozessor**

(30) Priorität: 27.03.1997 DE 19713153
(71) Anmelder: SIEMENS AKTIENGESELLSCHAFT, 80333 München (DE)
(72) Erfinder: Puchta, Ralf, Dipl.-Ing. (FH), 93053 Regensburg (DE); Menten, Frank, Dipl.-Ing. (FH), 93053 Regensburg (DE)

(57) **Zusammenfassung**

Zur Minimierung des elektronischen Schaltungsaufwandes ist eine Steuereinheit, insbesondere ein Mikroprozessor (MC) mit zumindest einem Universal-Port (P2) mit in ihrer Datenrichtung umkehrbaren Portpins vorgesehen, derart daß der Universal-Port (P2) sowohl als Eingabe-Port als auch als Ausgabe-Port für, vorzugsweise über einen Multiplexer (MP), nacheinander anwählbare Bedienelemente (B1-B7) einerseits und Anzeigeelement-Einheiten (A1-A3) andererseits einsetzbar ist; dadurch läßt sich die notwendige Zahl der Ports der elektronischen Steuereinheit reduzieren.

## Beschreibung

Die Erfindung bezieht sich auf eine Bedien- bzw. Anzeigevorrichtung mit einer elektronischen Steuereinheit, insbesondere mit einem Mikroprozessor, gemäß Patentanspruch 1; derartige Vorrichtungen sind insbesondere zur Verwendung in Steuermodulen für Haushaltskomfortgeräte, z.B. Kühl- und/oder Gefriergeräte, vorgesehen und dienen z.B. zur Vorgabe und Überwachungsanzeige von Temperatureinstellungen. Die verschiedenen Bedienfunktionen werden zweckmäßigerweise mit auf dem Steuermodul befindlichen Tastenelementen eingeleitet.

Die elektronische Steuereinheit, für die insbesondere ein Mikrocontroller vorgesehen ist, ist mit Eingangs-Ports vorgesehen, an denen die Bedienbefehle eingelesen werden bzw. mit Ausgangs-Ports versehen, an denen die Anzeigebefehle für die Anzeigeelemente und gegebenenfalls Schaltbefehle für weitere Leistungsbauteile ausgegeben werden; jeder Port weist mehrere, in der Regel bis zu acht, Portpins auf, an die jeweils eine Signalleitung anschließbar ist. Üblicherweise müßte daher die elektronische Steuereinheit zumindest eine Anzahl von Eingangs-Ports bzw. Eingangs-Portpins und Ausgangs-Ports bzw. Ausgangs-Portpins aufweisen, die der Zahl der maximal vorgesehenen Bedienelemente bzw. Anzeigeelemente bzw. Leistungsbauteile entspricht.

Der Aufwand für die elektronische Steuereinheit, insbesondere in Form eines Mikrocontrollers, kann erfindungsgemäß dadurch wesentlich gemindert werden, daß eine Steuereinheit mit zumindest einem Port mit in ihrer Datenrichtung umkehrbaren Portpins vorgesehen ist, derart daß dieser als Universal-Port sowohl als Eingabe-Port für einzugebende Bedienbefehle als auch als Ausgabe-Port für auszugebende Anzeigebefehle und gegebenenfalls Schaltbefehle einsetzbar ist.

Mikrocontroller bzw. Mikroprozessoren mit in ihrer Datenrichtung über ein Daten-Direktion-Register in ihrer Datenrichtung umkehrbaren I/O-Eingängen sind an sich bekannt.

Eine aufeinanderfolgende Aktivierung der Bedienelemente, der Anzeigeelement-Einheiten sowie gegebenenfalls der Aktuatoren für Leistungsbauteile erfolgt zweckmäßigerweise mittels eines an ein Ausgabe-Port des Mikrocontrollers bzw. Mikroprozessors anschließbaren Multiplexers.

Die Erfindung sowie weitere vorteilhafte Ausgestaltungen der Erfindung gemäß Merkmalen der Unteransprüche werden im folgenden anhand eines Ausführungsbeispiels einer Gefriergerätesteuerung in der Zeichnung näher erläutert; darin zeigen:
- FIG 1: in einem Prinzip-Blockschaltbild eine Bedien- bzw. Anzeigevorrichtung mit einem Mikrocontroller mit einem Universal-Port, dessen sieben Portpins sowohl zum Einlesen von Bedienbefehlen von sieben Bedienelementen als auch zum Ausgeben von Anzeigebefehlen für drei Anzeigeelement-Einheiten dient;
- FIG 2: in einem Prinzip-Blockschaltbild eine übliche Bedien- bzw. Anzeigevorrichtung mit einem Mikroprozessor mit einem Eingangs-Port, dessen Portpins zum Einlesen von Bedienbefehlen von sieben Bedienelementen dienen, sowie mit drei Ausgangs-Ports, deren Portpins jeweils zum Ausgeben von unterschiedlichen Anzeigebefehlen von drei Anzeigeelement-Einheiten dienen;
- FIG 3: eine Schaltungsausführung zum Blockschaltbild gemäß FIG 1;
- FIG 4: die Ausgangs-Signalfolge des Multiplexers gemäß FIG 1, 3.

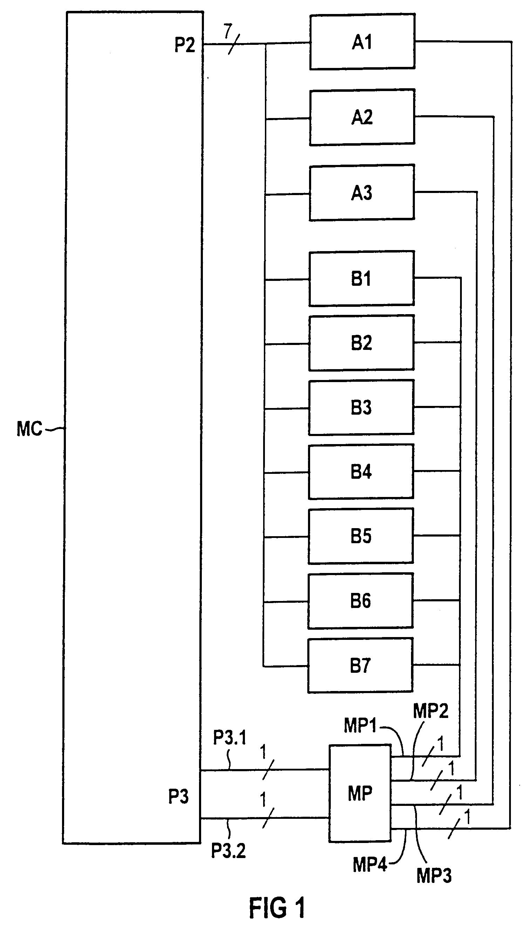

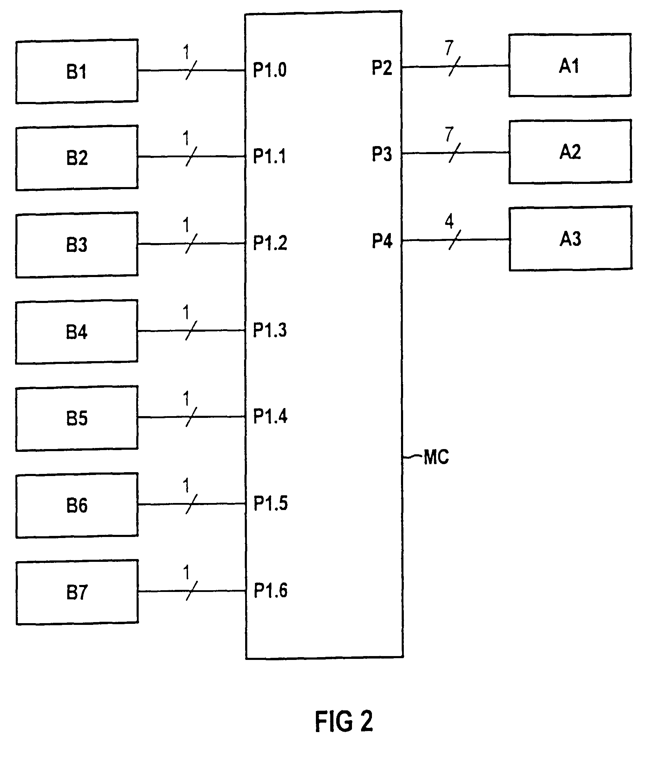

FIG 1,2 zeigen jeweils in einem Prinzip-Blockschaltbild eine Bedien- bzw. Anzeigevorrichtung für ein Gefriergerät mit hier angenommenen sieben Bedienelementen B1-B7 und drei Anzeigeelement-Einheiten A1-A3. Entsprechend der üblichen Ausführung gemäß FIG 2 sind die vorzugsweise als Tastenelemente ausgebildeten Bedienelemente B1-B7 an je einen Eingangs-Pin P1.0-P1.6 und die vorzugsweise als Mehrfachsegmentanzeigen bzw. LED's ausgebildeten Anzeigeelement-Einheiten A1-A3 an jeweils sieben bzw. vier Portpins von vier Ausgangs-Ports P2-P4 eines Mikrocontrollers MC angeschlossen. Derartige Mikrocontroller MC weisen in der Regel Ports mit bis zu acht Portpins auf. Das jeweilige Tastenelement des Bedienelementes B1 bzw.B2 dient z.B. zur schrittweisen down/up-Temperatureinstellung der Kühl- bzw. Gefriertemperatur des Gefriergerätes mit entsprechender Anzeige, kann aber auch zum Ein- bzw. Ausschalten von Leistungsbauteilen wie einem Verdampfer oder einem Lüfter eines Gefriergerätes ebenfalls u.U. mit entsprechender Anzeige dienen.

FIG 1 zeigt die erfindungsgemäß mögliche Minderung des elektronischen Aufwandes im Vergleich zur Ausführung nach FIG 2; dazu ist ein Mikroprozessor MC vorgesehen, dessen sieben Portpins eines Universal-Ports P2 in ihrer Datenrichtung umkehrbar sind, derart daß sie einerseits für eine Ansteuerung der Anzeigeelement-Einheiten A1-A3 und unter Umständen weiterer Leistungsbauteile als ausgangsseitige Portpins und andererseits für die Bedienelemente B1-B7 als eingangsseitige Portpins einsetzbar sind.

Zweckmäßigerweise erfolgt die Aktivierung der Bedienelemente, der Anzeigeelement-Einheiten und gegebenenfalls von Aktuatoren für Leistungsbauteile durch einen Multiplexer MP, der eingangsseitig an Steuerausgängen von z.B. zwei Ausgangs-Portpins P3.1;P3.2 eines Ports 3 des Mikroprozessors MC angeschlossen ist und ausgangsseitig mit einem Steuerausgang MP1 parallel mit jedem Bedienelement B1-B7 sowie mit je einem Steuerausgang MP2 bzw.MP3 bzw.MP4 mit je einer Anzeigeelement-Einheit A1 bzw.A2 bzw.A3 verbunden ist; der Multiplexer kann dabei auch integraler Bestandteil der elektronischen Steuereinheit, insbesondere in Form des Mikroprozessors MC, sein. Im Gegensatz zum Ausführungsbeispiel nach FIG 1 werden dann nicht nur zwei Ausgangs-Portpins des Ports P3 sondern es werden vier Ausgangs-Portpins entsprechend der Zahl der Steuerausgänge MP1-MP4 des in FIG 1 externen Multplexers MP benötigt; trotzdem bleibt der grundsätzliche Vorteil der Aufwandsminderung für die elektronische Steuereinheit einer Bedien- bzw. Anzeigevorichtung erhalten.

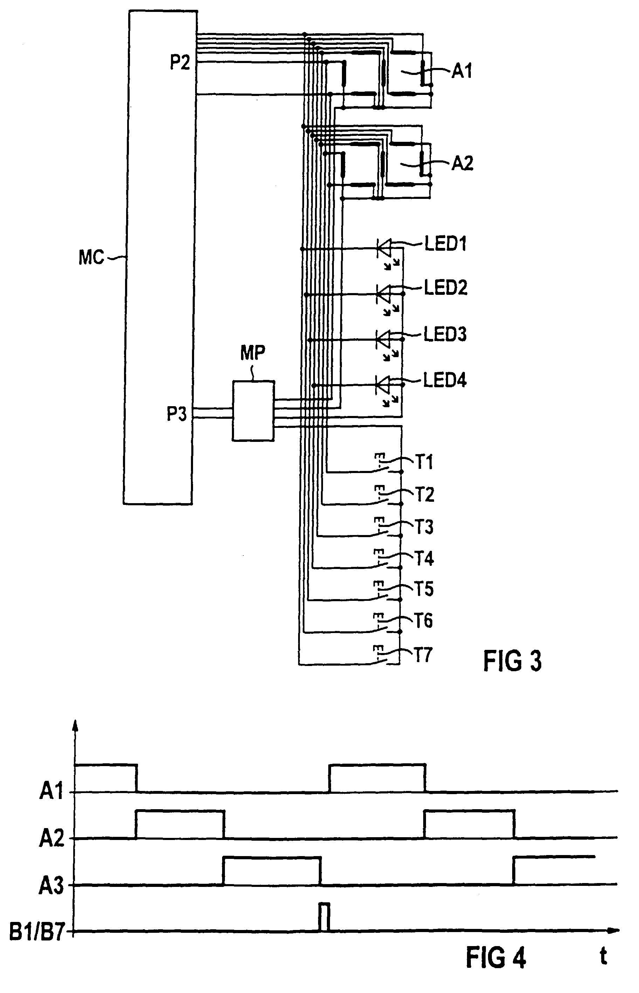

Nach einem anhand der Schaltungsausführung gemäß FIG 3 erläuterten Ausführungsbeispiel sind für die Bedienelemente B1-B7 Tastenelemente T1-T7, für die Anzeigeelement-Einheiten A1 bzw.A2 jeweils 7-Segment-Anzeigen, insbesondere für die Einerstellen-Anzeige und Zehnerstellen-Anzeige einer Temperatur-Einstellung eines Gefriergerätes, und für die Anzeigeelement-Einheit A3 vier Einzel-LED's vorgesehen.

FIG 4 zeigt als zeitlichen Verlauf die Signalfolge, gemäß welcher der Multiplexer MP über seine vier Steuerausgänge MP1-MP4 die Bedienelemente B1-B7 bzw. Tastenelemente T1-T7 parallel bzw. in dem übrigen Zeitraum die Anzeigeelement-Einheiten A1-A3 nacheinander anwählt und aktiviert. Die Ansteuerzeit und damit die Multiplexerrate ist zweckmäßiger im Sinne einer visuell ununterbrochenen Anzeige der zeitlich nacheinander ansteuerbaren Anzeigeelement-Einheiten A1-A3 gewählt. Bei im vorliegenden Beispiel angenommener Signalfolge-Periode von z.B. 10ms ist für die Aktivierung der einzelnen aufeinanderfolgend aktivierten Anzeigeelement-Einheiten eine Ansteuerzeit von jeweils 3ms und für die Bedienelemente eine zwischenliegende Ansteuerzeit von 1ms angenommen. Die Anzeigesignale für die einzelnen sieben Segmente einer aktivierten LED-Mehrfach-Segmentanzeige oder jeder einzelnen aktivierten LED-Einfach-Anzeige werden über je einen einzelnen Ausgangs-Portpin von insgesamt hier sieben Portpins des Universal-Ports P2 ausgegeben. Die Bedienelemente B1-B7 bzw. die Tastenelemente T1-T7 sind jeweils über einen einzelnen unterschiedlichen Portpin des Universal-Ports 2 einlesbar. Die Aktivierungszeiten korrespondieren mit der entsprechenden Umschaltung des Universal-Ports 2 entweder als entsprechender Eingangs-Port oder als entsprechender Ausgangs-Port mit entsprechenden Signalen für die jeweils aktivierten angeschlossenen Bauteile.

Außer den zuvor besprochenen Portpins für die Bedienelemente bzw. die Anzeigeelement-Einheiten können im Rahmen vorliegender Erfindung in ihrer Datenrichtung umkehrbare I/O-Portpins eines Mikrocontrollers in hier nicht näher dargestellter Weise auch zur Ansteuerung von Leistungsbauteilen des Gefriergerätes, wie z.B. für einen Verdichter, für eine Heizung und für einen Ventilator vorgesehen werden.

## Patentansprüche

1. Bedien- bzw. Anzeigevorrichtung, mit einer elektronischen Steuereinheit, insbesondere mit einem Mikroprozessor,
- mit von Bedienelementen (B1-B7) über zumindest einen Eingangs-Port in die Steuereinheit (MC) eingebbaren Bedienbefehlen;
- mit von der Steuereinheit (MC) über zumindest einen Ausgangs-Port an zumindest eine Anzeigeelement-Einheit (A1-A3) und/oder zumindest ein Leistungsbauteil ausgebbaren Anzeigebefehlen und/oder Schaltbefehlen;
- mit einer Steuereinheit mit zumindest einem Port mit in ihrer Datenrichtung umkehrbaren Portpins, derart daß dieser als Universal-Port (P2) entweder als Eingabe-Port für einzugebende Bedienbefehle oder als Ausgabe-Port für auszugebende Anzeigebefehle und/oder Schaltbefehle einsetzbar ist.

2. Bedien- bzw. Anzeigevorrichtung nach dem vorhergehenden Anspruch
- mit einer Aktivierung der Bedienelemente (B1-B7) bzw. der Anzeigeelement-Einheiten (A1-A3) und/oder Leistungsbauteile mittels eines an ein Ausgabe-Port (3.1;3.2) der elektronischen Steuereinheit, insbesondere in Form eines Mikroprozessors (MC), anschließbaren Multiplexers (MP).

3. Bedien- bzw. Anzeigevorrichtung nach dem vorhergehenden Anspruch
- mit einem Multiplexer (MP) als integraler Bestandteil der elektronischen Steuereinheit, insbesondere in Form eines Mikroprozessors (MC).

4. Bedien- bzw. Anzeigevorrichtung nach zumindest einem der vorhergehenden Ansprüche 2 bzw. 3
- mit einer Mulitplexrate des Multplexers (MP) im Sinne einer visuell ununterbrochenen Anzeige der zeitlich nacheinander aktivierbaren Anzeigeelement-Einheiten (A1-A3).

5. Bedien- bzw. Anzeigevorrichtung nach zumindest einem der vorhergehenden Ansprüche 2-4
- mit von dem Multiplexer (MP) über einen gemeinsamen Ausgang gleichzeitig aktivierbaren, je einem unterschiedlichen Portpin des Universal-Ports (P2) zugeordneten Bedienelementen (B1-B7) bzw. über jeweils einen gesonderten Ausgang einzeln aktivierbaren, jeweils einfach oder mehreren unterschiedlichen Portpins zugeordneten Anzeigeelement-Einheiten (A1-A3).

6. Bedien- bzw. Anzeigevorrichtung nach zumindest einem der vorhergehenden Ansprüche 2 bzw. 3 bzw. 4 bzw. 5
- mit von dem Multiplexer (MP) über jeweils einen gesonderten Ausgang einzeln, insbesondere nacheinander, aktivierbaren Anzeigeelement-Einheiten (A1;A2;A3).

7. Bedien- bzw. Anzeigevorrichtung nach zumindest einem der vorhergehenden Ansprüche
- mit jeweils über mehrere unterschiedliche Portpins des Universal-Ports (P2) anschließbaren Anzeigeelementen (A1;A2) in Form von Mehrsegmentanzeigen, insbesondere Temperaturanzeigen eines Gefriergerätes.

8. Bedien- bzw. Anzeigevorrichtung nach zumindest einem der vorhergehenden Ansprüche
- mit jeweils über einen unterschiedlichen Portpin des Universal-Ports (P2) anschließbaren Bedienelementen (B1-B7) in Form von Tastenelementen (T1-T7), insbesondere von down/up-Temperatur-Einstelltasten eines Gefriergerätes.
